# EUROPÄISCHE PATENTSCHRIFT

(11) **EP 2 690 000 B1**
(45) Veröffentlichungstag und Bekanntmachung des Hinweises auf die Patenterteilung: **22.02.2017**
(21) Anmeldenummer: 13177213.9
(22) Anmeldetag: 19.07.2013
(51) Int. Cl.: B62M 9/08

(54) **Schaltung mit einem Drehelement zum Einsatz in einem Fahrzeug**
Circuit with a rotary element for use in a vehicle
Circuit doté d'un élément rotatif destiné à être utilisé dans un véhicule

(30) Priorität: 24.07.2012 DE 102012212971
(43) Veröffentlichungstag der Anmeldung: 29.01.2014
(73) Patentinhaber: ROBERT BOSCH GMBH, 70442 Stuttgart (DE)
(72) Erfinder: Gabriel, Markus, 71640 Ludwigsburg (DE)

(56) Entgegenhaltungen:
- CN-Y- 2 372 226
- FR-A1- 2 664 956
- GB-A- 1 541 281
- US-A- 5 984 814
- US-A1- 2002 084 618
- US-A1- 2005 148 416

## Beschreibung

Die Erfindung betrifft ein Kettenblatt oder ein Ritzel zum Einsatz an einem Fahrzeug.

### Stand der Technik

Ein konventioneller Fahrradantrieb hat eine zweistufige Schaltung, bei der an der Tretkurbel ein bis drei Kettenblätter und am Hinterrad bis zu zehn Ritzel angebracht sind. Durch die Kombination der vorderen Kettenblätter mit den hinteren Ritzeln wird erreicht, dass verschiedene Übersetzungen zum Antrieb des Fahrrads erreicht werden können. Zur Einstellung der richtigen Gänge ist jedoch durch die Zweiteilung sowohl bei den Kettenblättern als auch bei den Ritzeln eine meist mechanische Einstellung notwendig, um die Kette von dem einen Zahnkranz auf den nächsten zu heben. Darüber hinaus ist es durch die seitliche Anordnung der Kettenblätter bzw. Ritzel und der darüber verlaufenden Kette nicht möglich, alle Kombinationen zu nutzen, da die Kette ansonsten quer gespannt werden müsste. Eine derart quer gespannte Kette erhöht neben der ungünstigen Kraftübertragung zusätzlich auch die Gefahr eines Kettenspringens sowie die Abnutzung durch Reibung.

Der nächstliegende bekanntgewordene Stand der Technik ist den US5984814 zu entnehmen.

Offenbarung der Erfindung Mit der vorliegenden Erfindung wird eine Schaltung bzw. ein Verfahren zur Steuerung der Schaltung für ein Fahrzeug beschrieben, insbesondere für ein Zweirad bzw. ein Fahrrad. Dabei ist vorgesehen, dass die Schaltung ein erstes Drehelement aufweist, z.B. ein Kettenblatt oder ein Ritzel, welches zur Übertragung von Drehbewegungen geeignet ist. Dieses erste Drehelement ist um eine Mittelachse drehbar gelagert. Weiterhin ist ein Übertragungselement vorgesehen, welches umfänglich an dem Drehelement anliegt. Der Kern der Erfindung besteht nun darin, dass wenigstens ein Teil des Drehelements verschoben wird, um das anfänglich in einem ersten Abstand zur Mittelachse befindliche Übertragungselement in eine Position zu bringen, welche einen geänderten zweiten Abstand aufweist. Dies kann bevorzugt dadurch erreicht werden, dass ein Aktuator vorgesehen ist, der wenigstens einen Teil des Drehelements in radialer oder axialer Richtung verschiebt, um somit den effektiven zur Übertragung zur Verfügung stehenden Durchmesser zu variieren.

Der Vorteil der beanspruchten Erfindung liegt darin, dass eine Schaltung realisiert werden kann, die auf engem Raum verschiedene Übersetzungsverhältnisse bereit stellt, ohne dass ein mechanischer Wechsel des Übertragungselements von einem Kettenblatt bzw. Ritzel auf ein anderes erfolgen muss. Somit reduziert sich die Gefahr eines "Verschaltens", indem das Übertragungselement, z.B. die Kette zwischen die Kettenblätter oder Ritzel rutscht.

In einer Weiterbildung der Erfindung ist vorgesehen, dass der Aktuator elektrisch betätigbar ist, d.h. elektrisch angesteuert wird. Dabei kann besonders vorgesehen sein, dass eine gepulste Ansteuerung erfolgt, um den Energieaufwand und die nötige Ansteuerzeit zu reduzieren. Darüber hinaus ist auch möglich, den oder die Aktuatoren nur kurzzeitig während einer bestimmten Umlaufsituation des ersten Drehelements anzusteuern.

Die Aktuatoren sind vorteilhafterweise derart ausgestaltet, dass sie aus- oder einfahr sind. Dabei können die Aktuatoren je nach Verwendungszweck derart am oder im ersten Drehelement angeordnet sein, dass sie in radialer oder axialer Richtung aus- bzw. einfahren, insbesondere wenn sie bestromt werden. Hierfür sind besonders Piezo-, elektromechanische, Magnet- oder Federelemente als steuerbare Aktuatoren geeignet. Denkbar sind auch magneto-rheologische Aktuatoren, bei denen aufgrund von äußeren angelegten Magnetfeldern eine reversible Verformung erreicht werden kann. Eine ähnliche reversible Verformung ist auch beim Einsatz von Formgedächtnislegierungen als Aktuatoren möglich, die in einer besonderen Ausführung auch magnetisch aktivierbar sein können. Besonders die Aktivierung der Aktuatoren mittels von außen wirkenden Magnetfeldern oder elektromagnetischen Feldern erlaubt es, eine einfache Ansteuerung der Aktuatoren zu realisieren.

In einer Ausgestaltung der Erfindung ist vorgesehen, dass das erste Drehelement in seinem äußeren Umfang erste Zähne aufweist, die zum Eingriff in das Übertragungselement, z.B. eine Kette geeignet sind. Weiterhin ist vorgesehen, dass diesen ersten Zähnen erste Aktuatoren zugeordnet sind.

Weiterhin kann vorgesehen sein, dass das erste Drehelement in seinem äußeren Umfang zweite Zähne aufweist, die zwischen den ersten Zähnen angeordnet und denen zweite Aktuatoren zugeordnet sind. Vorteilhafterweise sind die zweiten Zähne derart in dem ersten Drehelement untergebracht, dass sie im Ruhezustand bzw. bei eingefahrenen Aktuatoren nicht in das Übertragungselement eingreifen und somit zunächst in einem Ansteuermodus inaktiv für die Übertragung sind. Optional kann vorgesehen sein, dass nicht zwischen je zwei ersten Zähnen ein zweiter Zahn angeordnet ist, sondern jeweils zwischen einem Paar aus ersten Zähnen. Es ist jedoch auch möglich, dass die zweiten Zähne unregelmäßig zwischen n ersten Zähnen untergebracht sind.

Um die ersten und zweiten Zähne bei einer Ansteuerung der zugeordneten Aktuatoren auf den gleichen Umfang, d.h. auf die gleiche Entfernung von der Mittelachse zu bekommen, kann vorgesehen sein, die ersten und zweiten Aktuatoren mit unterschiedlichen Ausdehnungen bzw. Hüben zu versehen. Alternativ kann auch vorgesehen sein, die ersten und zweiten Aktuatoren mit unterschiedlichen Ansteuerungen aus- und/oder einfahren zu lassen.

Eine weitere Ausgestaltung der Erfindung verwendet spiralförmige Zähne, die schraubenförmig ausgefahren werden können. Dabei sind Verbindungselemente vorgesehen, die in einem ersten Zustand schraubenförmig mit der Mittelachse verbunden sind und in einem zweiten Zustand entweder teilweise oder gänzlich gestreckt werden, um so die Zähne in eine Position zu bringen, die sie weiter vom Mittelpunkt entfernen. Auch in dieser Ausgestaltung können zwischen den Zähnen zusätzliche zweite Zähne verborgen sein, die durch das Aufdrehen der Spiralform in das Übertragungselement eingreifen können.

Darüber hinaus kann vorgesehen sein, dass die Aktuatoren nur einmal die Ausdehnung bzw. Hub aufbringen, um die Zähne auf einen anderen Abstand zur Mittelachse zu bringen. Zum Halten dieser Position können Rastelemente vorgesehen sein, die die Zähne dann in dieser Stellung halten. Somit kann der veränderte Abstand des Übertragungselements von der Mittelachse und somit das Übertragungsverhältnis der Drehmoments ohne ständige Ansteuerung der Aktuatoren beibehalten werden. In einer Weiterbildung kann vorgesehen sein, dass diese Rastelemente oder Halteelemente ebenfalls angesteuert werden können, so dass die Zähne in ihre ursprüngliche Position zurück fallen. Alternativ kann auch vorgesehen sein, dass die Rastposition durch eine erneute Ansteuerung der Aktuatoren gelöst werden.

Besonders vorteilhaft können an einem Zweirad, z.B. einem Fahrrad als Drehelemente Kettenblätter und/oder Ritzel eingesetzt werden. Dabei kann insbesondere der Einsatz an einem Elektrofahrrad, wie einem Pedelec oder einem EBike interessant sein, da bei diesem Zweirad bereits eine Energieversorgung für die Ansteuerung der Aktuatoren vorliegt. Gerade für Elektrofahrrädern kann die vorgeschlagene Schaltung eine vorteilhafte Erweiterung darstellen, da auf kleinem Raum ohne zusätzliche Kettenblätter oder Ritzel verschiedene Übersetzungen eingestellt werden können. Bei der Verwendung von Mittelmotoren ist darüber hinaus bereits die elektrische Versorgung an die Tretkurbel vorgesehen, so dass ein Anschluss bzw. eine Ansteuerung der Aktuatoren kein Problem darstellen sollte.

In einer weiteren Ausgestaltung der Erfindung sind für die Schaltung zwei kegelförmige Drehelemente vorgesehen, die derart in Richtung ihrer Mittelachsen zueinander angeordnet sind, dass über die Mantelflächen das Übertragungselement geleitet werden kann. Zur Veränderung des Abstands des Übertragungselements zur Mittelachse, d.h. zur Einstellung eines veränderten Übertragungsverhältnisses, wird wenigstens eines der Drehelemente mittels eines Aktuators in axialer Richtung auf das andere Drehelement zu- oder wegbewegt. Hierbei kann es sich als Vorteil herausstellen, wenn wenigstens eines der beiden Drehelemente einen Kegelstumpf aufweist.

Zur Einstellung eines veränderten Übertragungsverhältnisses kann vorgesehen sein, dass sich nur eines der beiden Drehelemente in axialer Richtung verschieben lässt, während das andere starr in seiner Position verbleibt. Alternativ kann jedoch auch vorgesehen sein, dass sich beide Drehelemente gegeneinander ebenfalls in axialer Richtung verschieben lassen.

Bei der Verwendung von kegelförmigen Drehelementen ergibt sich der Vorteil auch daraus, dass je nach Ausgestaltung nur ein oder zwei Aktuatoren verwendet werden müssen, die zentral an der Mittelachse angeordnet sind, um die Drehelemente zu verschieben. Dies reduziert sowohl die Komplexität als auch die notwendige Ansteuerung der Schaltung.

Wird die erfindungsgemäß Schaltung sowohl an der Antriebsachse als auch an der Abtriebsachse eingesetzt, kann durch die stetige lineare Ausrichtung des Übertragungselements eine zusätzliche Stabilität bei Schaltvorgängen erreicht werden, da eine seitliche Verdrehung des Übertragungselements vermieden wird. Statt dessen wird das Übersetzungsverhältnis lediglich über eine radiale bzw. vertikale Änderung des Abstands von der Drehachse eingestellt. Ggf. ist für die Straffung des Übertragungselements noch ein Spannelement vorgesehen, wie es bei derzeitigen Fahrradschaltungen ebenfalls benutzt wird. Bei der Verwendung der Erfindung an einem Elektrofahrrad besteht dabei die Möglichkeit, auch das Spannelement in Abhängigkeit des Schaltvorgangs elektrisch zu betätigen.

Vorteilhafterweise kann die Erfindung direkt an einem Motor oder an einem Rad befestigt sein, wobei vorgesehen ist, dass das Übertragungselement, z.B. eine Kette, ein Riemen oder ein Laufband repräsentiert.

Weitere Vorteile ergeben sich aus der nachfolgenden Beschreibung von Ausführungsbeispielen bzw. aus den abhängigen Patentansprüchen.

### Kurze Beschreibung der Zeichnungen

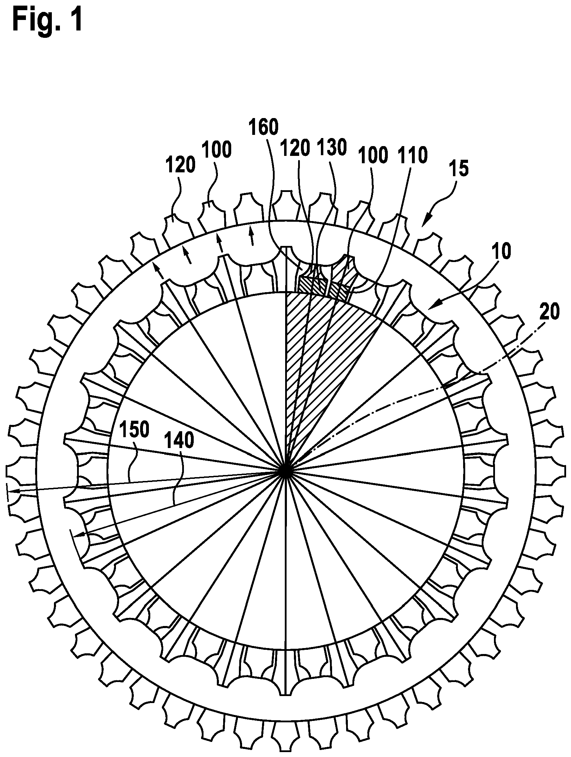

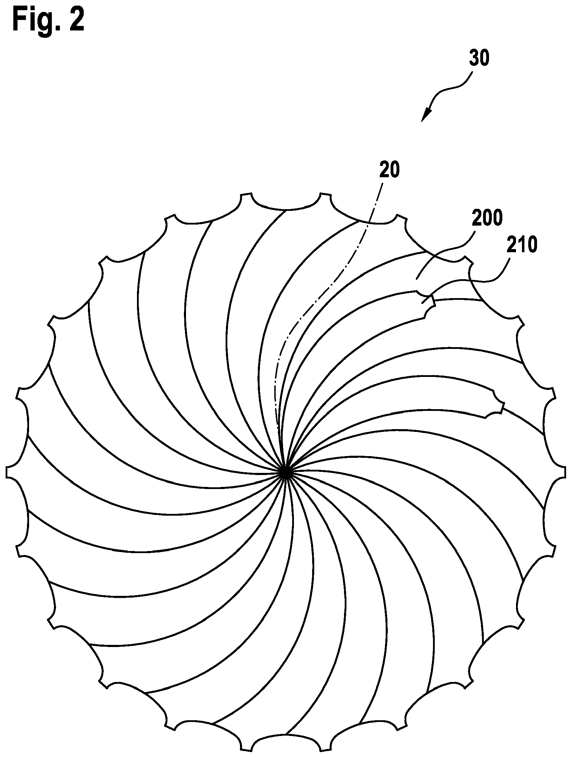

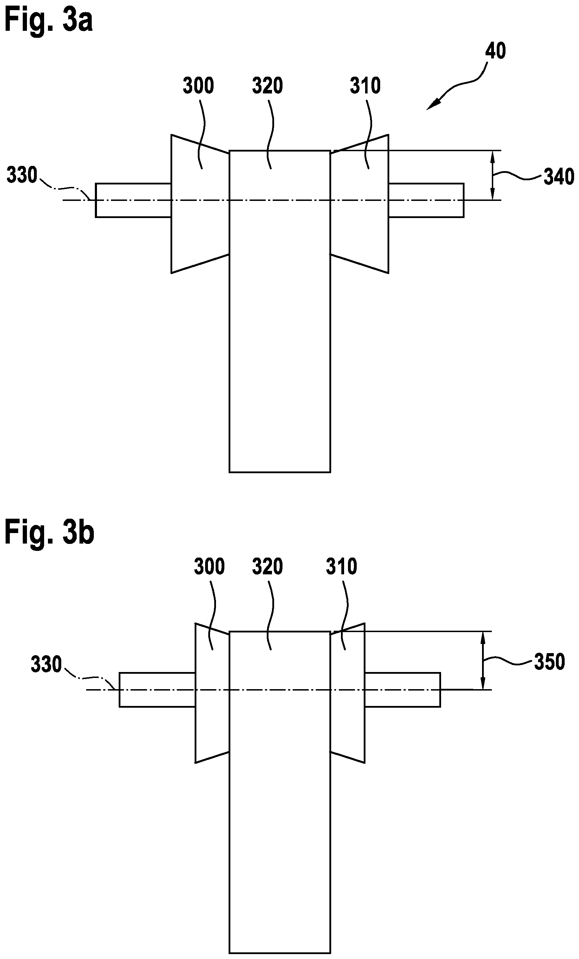

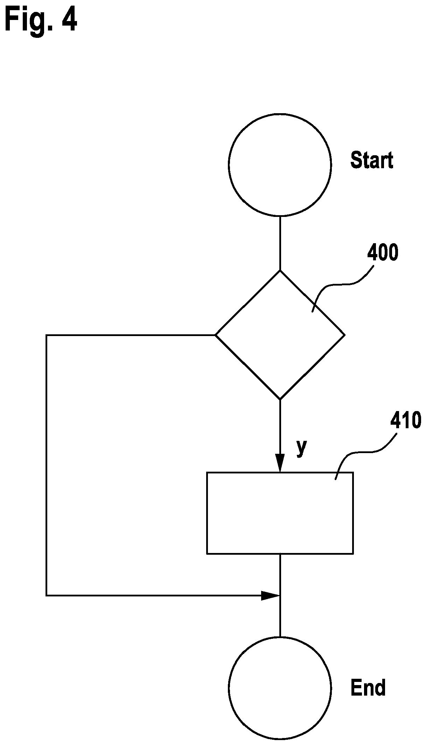

Die Figur 1 zeigt eine erste Ausführungsform der Erfindung in Form eines veränderlichen Kettenblatts für ein Zweirad. In der Figur 2 wird eine zweite Ausführungsform dargestellt. Mit der Figur 3 wird eine dritte Ausführungsform beschrieben. In der Figur 4 ist ein Flussdiagramm dargestellt, welches ein mögliches Verfahren zur Ansteuerung der Schaltung zeigt.

### Ausführungsformen der Erfindung

Die vorliegende Erfindung beruht darauf, dass statt mehreren Kettenblätter bzw. Ritzeln nur ein oder zwei Drehelemente wie z.B. Zahnräder verwendet werden müssen, um mittels eines Übertragungselements, z.B. einer Kette oder einem Antriebsriemens eine Vielzahl von Übersetzungen zu erreichen. Dabei werden im folgenden verschiedene Ausführungsbeispiele beschrieben, bei denen ein als Kettenblatt oder Ritzel zu verwendendes Drehelement dazu genutzt wird, den Abstand des Übertragungselements von der Antriebs- oder Abtriebsachse zu verändern.

In einem ersten Ausführungsbeispiel, wie es in Figur 1 dargestellt wird, ist ein Kettenblatt in einem ersten Zustand 10 dargestellt, welches um eine Achse 20 drehbar gelagert ist. Beispielhaft ist hierbei ein Zahnrad in Form eines Kettenblatts mit zweiundzwanzig ersten Zähnen 100 für die (Antriebs-)Achse einer Tretkurbel eines Zweirads, z.B. eines Fahrrads dargestellt. Selbstverständlich kann dieses Zahnrad jedoch auch jede andere Anzahl von Zähnen aufweisen, vor allem beim Einsatz des Zahnrads als Ritzel an der hinteren (Abtriebs-) Achse des Zweirads.

Zusätzlich zu den in einem ersten Abstand 140 zum Achsmittelpunkt 20 angeordneten ersten Zähnen 100 sind weitere zweite Zähne 120 vorgesehen, die zwischen den ersten Zähnen 100 "verborgen" angeordnet sind. Im vorliegenden ersten Ausführungsbeispiel sind dabei die zweiten Zähne 120 derart angeordnet, dass jeweils zwischen zwei ersten Zähnen 100 ein zweiter Zahn 120 vorgesehen ist, so dass ebenfalls zweiundzwanzig zweite Zähne 120 vorgesehen sind. In einem ersten Zustand des veränderlichen Zahnrads sind dabei die zweiten Zähne 120 versenkt angeordnet, so dass eine das Zahnrad umlaufende Kette nur in die ersten Zähne 100 eingreift. Diese Versenkung kann wie in der Figur 1 dargestellt, mittels einer Aussparung 160 erfolgen oder in einer anderen Art realisiert werden. Besonders vorteilhaft ist an der dargestellten Versenkung der zweiten Zähne 120 nach Figur 1, dass der obere Teil der Zähne ggf. als Auflagefläche für das Übertragungselement, z.B. die Kette dienen kann.

Den ersten Zähnen 100 ist ein erster Aktuator 110 und den zweiten Zähnen 120 ein zweiter Aktuator 120 zugeordnet, die jeweils unterhalb der Zähne angeordnet sind. Mittels dieser Aktuatoren 110 und 130 können die einzelnen Zähne aus- und wieder eingefahren werden. Durch die unterschiedlichen Höhen der beiden Zähne 100 und 120 müssen die Aktuatoren unterschiedliche (radiale) Hübe bewerkstelligen, so dass sie ggf. unterschiedlich ausgestaltet sein müssen. Es ist jedoch auch möglich, dass aus fertigungstechnischen Gründen beide Aktuatoren identisch sind, wobei dann zusätzlich unterschiedliche Ansteuerungen notwendig sind. Dies ist bei einer bauseitigen Anpassung der unterschiedlichen Hübe bei gleicher Ansteuerung nicht notwendig.

In der Figur 1 werden die Aktuatoren auf dem äußeren Rand des Kettenblatts 10 dargestellt. Darüber hinaus kann jedoch auch vorgesehen sein, die Aktuatoren segmentweise an jeder Stelle unterzubringen, solange ein separates aus- und einfahren der damit verbundenen Zähne ermöglicht wird.

Wie in der Figur 1 dargestellt, können mit Hilfe der Aktuatoren 110 und 130 das Zahnrad in einen zweiten Zustand 15 gebracht werden, in dem die ersten und zweiten Zähne 100 und 120 einen zweiten Abstand 150 zum Achsmittelpunkt 20 aufweisen. Da dieser zweite Abstand 150 größer als der erste Abstand 140 ist, erhöht sich bei einer Umdrehung des Zahnrads die zurückgelegte Strecke der anliegenden Kette, so dass eine größere Drehzahl auf ein Abtriebsrad gebracht werden kann, d.h. die Übersetzung wird erhöht. Um eine möglichst gute Kraftübertragung auf die Kette zu ermöglichen, werden zusätzlich zu den ersten Zähnen 100 auch die zweiten Zähne 120 ausgefahren, die dann ebenfalls in die Glieder der Kette eingreifen. In dem ersten Ausführungsbeispiel gemäß der Figur 1 wird somit eine Verdoppelung der Zähne auf vierundvierzig im äußeren Umfang dargestellt.

Weiterhin kann in einem Ausführungsbeispiel vorgesehen sein, dass nur jeder zweite oder n-te Zwischenraum mit einem zusätzlichen Zahn ausgestattet ist.

Darüber hinaus ist auch möglich, dass die Zähne nicht alle gleichzeitig (radial) nach außen ausgefahren werden, sondern (zeitlich) gestuft, z.B. in einem ersten Schritt nur jeder zweite versenkte Zahn und in einem zweiten Schritt dann weitere Zähne. So können auch Zwischengrößen der Kettenblätter erreicht werden. Ggf. ist dann aber notwendig, dass die Zähne nicht radial, sondern leicht schräg nach außen verschoben werden, so dass die Abstände der Zähne für die Kettenglieder angepasst werden.

Besonders vorteilhaft kann die Schaltung in einem Ausführungsbeispiel eingesetzt werden, wenn das Ausfahren der Aktuatoren zu einem Zeitpunkt bzw. in einem Zeitraum erfolgt, in dem die Zähne nicht in das Übertragungsglied bzw. die Kette eingreifen. Dies ist regelmäßig beim Umlauf des Kettenblatts im Uhrzeigersinn im Bereich zwischen 7 und 11 Uhr der Fall. Da in diesem Bereich keine zusätzliche Last durch das Übertragungsglied verschoben werden muss, kann die Steuerung der Schaltung die Aktuatoren nach dem Ausfahren aus den Gliedern des Übertragungslieds beginnen, die Aktuatoren und somit die Zähne in eine weiter (radial) nach außen stehende Position zu bringen. Vorteilhafterweise ist dieses Ausfahren vor dem Eingreifen der Zähne in das Übertragungsglied abgeschlossen.

In einem weiteren Ausführungsbeispiel kann vorgesehen sein, dass nur erste Zähne vorhanden sind, die mittels Aktuatoren ausgefahren werden. In diesem Fall kann es vorkommen, dass nicht jedes Kettenglied in einen Zahn eingreift.

Als Aktuatoren kommen beispielsweise Piezoaktuatoren in Frage, die sich beim Anlegen einer Spannung gezielt ausdehnen lassen. Sobald keine Spannung mehr anliegt, ziehen sie sich wieder in ihre Ausgangslage zurück. Weiterhin kann vorgesehen sein, dass das Ausfahren mittels (elektrisch aktivierbarer) Federn erfolgt, die z.B. über Magnete gesteuert werden. Auch hierbei kann das Aus- und Einfahren mittels des Anlegen einer Spannung bzw. eines Stroms gesteuert werden. Darüber hinaus sind jedoch sonstige elektrisch ansteuerbare Elemente denkbar, die den notwendigen Hub erzeugen. Besonders interessant könnte dabei der Einsatz von magnetisch aktivierbaren Aktuatoren sein, z.B. magneto-rheologische Elemente oder Formgedächtnislegierungen, da durch derartige Aktuatoren eine zusätzliche Verdrahtung vermieden wird. Somit ist weder eine Bestromung noch eine Ansteuerung über Leitungen notwendig, die an oder in dem Drehelement vorgesehen werden müssen. Eine Aktivierung kann dabei über codierte oder individuell erzeugte Magnetfelder oder Magnetfeldkombinationen erreicht werden, so dass Streufelder keine ungewollte Schaltungsaktivität erzeugt.

Statt einer ständigen Bestromung der Akutatoren, um die ausgefahrene Stellung zu halten, kann auch vorgesehen sein, die entsprechende Stellung mittels Arretierungen zu halten. So können beispielsweise Haken zur Arretierung in wenigstens einer (Rast-) Stellung vorgesehen sein. Bei einer derartigen Lösung ist nur für das Ausfahren bzw. das Lösen der Arretierung eine entsprechende Ansteuerung notwendig, so dass der notwendige Stromverbrauch minimiert wird und eine Reduzierung der notwendigen Energie und auch eine Verbesserung der Stabilität erreicht wird, da die Last auf den ausgefahrenen Zähnen nicht von dem Aktuator aufgebracht werden muss.

In der Figur 2 wird eine weitere mögliche Ausgestaltung eines veränderlichen Kettenblatts gezeigt. Dabei sind die Zähne 200 spiralförmig angeordnet, so dass sie durch eine Drehbewegung radial nach außen aufgespreizt werden können. Zwischen diesen spiralförmigen Anordnungen können zusätzliche Zähne 210 vorgesehen sein, die zusätzlich ausgefahren werden, um die Kettenglieder aufzunehmen. Wie bereits in der Ausführung nach Anspruch 1 ausgeführt, kann auch hier vorgesehen sein, dass nicht zwischen jeder spiralförmigen Anordnung der Grundzähne 200 zusätzliche Zähne 210 angeordnet sind. Darüber hinaus kann ebenfalls vorgesehen sein, dass die zusätzlichen Zähne 210 nicht gleichzeitig, sondern abgestuft ausgefahren werden, um Zwischenschritte bei der Schaltung zu ermöglichen.

Optional kann vorgesehen sein, dass die beweglichen Zähne 200 bzw. 210 nur über eine spiralförmige Ausgestaltung aufweisen, die im Außenbereich des Kettenblatts angeordnet ist.

Bei der Ausgestaltung der spiralförmigen Anordnung ist darauf zu achten, dass die Kraft, die über die Kette übertragen wird, derart auf die Spiralarme verteilt wird, dass möglichst keine Querkräfte entstehen, um eine Beschädigung zu vermeiden. Ebenso ist darauf zu achten, dass die Aufspreizung, z.B. mittels der vorstehend beschriebenen Aktuatoren derart vorgesehen ist, dass die Kraft nicht beständig auf den Aktuatoren lastet, da die Aktuatoren somit zusätzlich angesteuert werden müssten, um die Aufspreizung konstant zu halten. Denkbar wäre hier beispielsweise eine Rasteinstellung, die mittels der Aktuatoren wieder gelöst werden könnte. Optional kann auch vorgesehen sein, die Verschiebung mittels Kugeln zu gestalten, die in einer Führung laufen und an bestimmten Positionen mittels entsprechender Öffnungen einrasten.

Es ist auch möglich, für die Aufspreizung bzw. das Zusammenziehen der spiralförmigen Ausgestaltung die Kraft zu nutzen, die von der Kette (beispielsweise durch die Trittkraft des Fahrers) auf das Kettenblatt ausgeübt wird. In diesem Fall sind dann lediglich die Arretierungen anzusteuern, die das Kettenblatt in der entsprechenden Stellung halten. Dies vermindert sowohl die notwendige Energie, die aufgebracht werden muss als auch die notwendigen Aktuatoren, da bei der Lösung der Arretierungen nur punktuell Aktuatoren eingesetzt werden müssen. Hierbei ist jedoch je nach Verwendung der spiralförmigen Ausgestaltung am Antrieb oder am Hinterrad darauf zu achten, dass die Drehrichtung der Spirale der angesetzten Kraftrichtung angepasst ist. Weiterhin sind Aktuatoren vorzusehen, die die Spirale wieder in die Ausgangsstellung bringt.

In den Figuren 3a und 3b ist ein weiteres Ausführungsbeispiel der Erfindung ausgeführt. Dabei werden zwei kegelförmige Kettenblätter 300 und 310, die sich um eine Achse 330 drehen, gegenüber angeordnet, über die ein breites Antriebsband 320 oder eine Kette läuft (Figur 3a). Durch ein verschieben der beiden Kegel 300 und 310 zueinander in axialer Richtung (Figur 3b) erhöht sich der Abstand (340 auf 350) des Antriebsbands von der Achse, so dass eine stufenlose Schaltung ermöglicht wird. Damit die beiden kegelfömigen Kettenblätter 300 und 310 aufeinander zu bewegt werden können, kann vorgesehen sein, dass die Kettenblätter als Kegelstümpfe ausgebildet sind.

Denkbar auch, dass die beiden Kettenblätter 300 und 310 jeweils separat auf einer Achse drehbar angeordnet sind, wobei jedoch vorteilhafterweise vorgesehen ist, dass diese beiden Achsen eine gemeinsame Mittelachse bilden.

In einem weiteren Ausführungsbeispiel kann vorgesehen sein, dass nur eine der beiden kegelförmigen Kettenblätter 300 bzw. 310 bewegt wird, während das andere Kettenblatt starr bleibt. Durch eine einseitige Verschiebung der Kettenblätter würde sich das Antriebsband 320 automatisch an die dann vorhandene Auflagefläche der Kettenblätter anpassen. Eine derartige Ausgestaltung der Vorrichtung würde sowohl den Aufbau mittels Aktuatoren zur Verschiebung als auch den Ansteueraufwand reduzieren.

Als Aktuator zur Verschiebung wenigstens eines kegelförmigen Kettenblatts kann neben den bereits oben erwähnten Piezoelementen, Federn oder Magneten u.U. mit entsprechenden Arretierungen, kann auch ein Motor verwendet werden. Dieser Motor kann derart vorgesehen sein, dass die axiale Verschiebung stufenlos oder schrittweise erfolgt.

Wie bereits die vorstehend beschriebenen Ausführungsbeispiele kann auch die Ausgestaltung nach Figur 3a bzw. 3b sowohl an der Antriebsachse der Tretkurbel als auch an der Abtriebsachse des Hinterrads verwendet werden. Falls sowohl an der Tretkurbel als auch am Hinterrad ein derartiges System installiert wird, kann eine stufenlose Schaltung realisiert werden, die sich den erforderlichen Übersetzungen optimal anpassen kann.

Selbstverständlich können alle vorstehenden Ausführungen auch bei der Schaltung am Hinterrad verwendet werden. Durch eine Steuerung der Antriebs- und Hinterradschaltung kann so eine "weichere" Schaltung beim Fahren erreicht werden.

Weiterhin kann mit der Steuerung des variablen Kettenblatts auch ein "runderes" Fahrvergnügen geschaffen werden, indem die Schaltung der vorderen Übersetzung in Abhängigkeit von dem Gang am Hinterrad oder umgekehrt eingestellt wird. Somit muss der Fahrer des Zweirads nur noch eine Schaltung bedienen und selber nicht mehr aufpassen, inwieweit "unmögliche" Einstellungen zwischen den beiden Schaltungen eingestellt sind. Für den Fall, dass beide Schaltungen, d.h. sowohl die Schaltung an der Tretkurbel als auch am Hinterrad elektronisch geregelt ist, kann die gesamte Schaltung in Abhängigkeit von der Leistungsanforderung des Fahrers geregelt werden.

Durch die notwendige elektrische Ansteuerung kann das variable Kettenblatt vorteilhafterweise bei einem Elektrofahrrad eingesetzt werden, da dort bereits eine Energiequelle und eine elektrische Kontaktierungen zum Motor vorhanden ist. Neben einer direkten Verdrahtung kann dabei auch eine Funkansteuerung der Aktuatoren vorgesehen sein, ggf. indem die einzelnen Aktuatoren mittels individueller Codierung per Funk angesteuert werden. Daneben sind jedoch auch magneto-rheologische Aktuatoren denkbar, bei denen aufgrund von äußeren angelegten Magnetfeldern eine reversible Verformung erreicht werden kann.

Dabei kann in einem weiteren Ausführungsbeispiels vorgesehen sein, dass das erfindungsgemäße variable Drehelement, z.B. das Kettenblatt nicht direkt auf der Tretachse angeordnet ist, sondern dem Motor des Antriebs zugeordnet ist, welches durch eine interne Übersetzung auf die Achse der Tretkurbel wirkt. Somit kann die vorgeschlagene Schaltung unabhängig von der Betätigung der Tretkurbel durch den Fahrer in Verbindung mit dem elektrischen Antrieb des elektrischen Motors verwendet werden. Somit könnte der elektrische Antrieb ohne Änderung der Ansteuerung des Motors über eine Veränderung des Durchmessers des zugeordneten Kettenblatts eine Änderung des auf das Fahrrad übertragenen Drehmoments erreichen.

Allgemein kann vorgesehen sein, dass der beschriebene Schaltvorgang nur in einem Leerlauf durchgeführt wird, um die Belastung auf die Bauteile oder den Motor zu vermindern. Alternativ kann auch vorgesehen sein, während des Schaltvorgangs bewusst eine Leerlauf zu erzeugen. Dies ist besonders bei der Verwendung eines Elektromotors als (zusätzlichen) Antrieb möglich.

Ein mögliches Verfahren, mit dem die erfindungsgemäße Schaltung betrieben werden kann, ist in Figur 4 dargestellt. Nach dem Start des Verfahrens wird in einem Schritt 400 abgefragt, inwieweit eine Schaltungsanforderung durch den Fahrer oder aufgrund einer internen (automatischen) Auswertung des Fahrverhaltens vorliegt, z.B. aufgrund der Leistungsanforderung des Fahrers. Falls keine Schaltungsanforderung vorliegt, wird das Verfahren beendet. Alternativ kann das Verfahren auch dann erst gestartet werden, wenn eine Schaltungsanforderung erkannt wird. Dann entfällt der Schritt 400. Anschließend wird der Aktuator des Drehelements, z.B. ein Piezoelement, ein Magnet, eine verstellbare Feder, ein Formgedächtniselement, ein magneto-rheologisches Element oder ein Motor im Schritt 410 angesteuert, um die Übersetzung entsprechend der vorstehenden Ausführungsbeispiele zu verändern. Dabei kann wie vorstehend bereits ausgeführt, auch eine gestufte Ansteuerung vorgesehen sein, beispielsweise indem zunächst nur ein Teil der Zähne ausgefahren werden. Optional kann auch vorgesehen sein, dass während der Aktivierung des Aktuators eine normale Betätigung des Drehelements zumindest eingeschränkt wird, um eine reibungslose Anpassung an den neuen Zustand zu ermöglichen.

In einer weiteren Anwendung des Verfahrens kann vorgesehen sein, dass bei der Ansteuerung auch das zu übertragende Drehmoment berücksichtigt wird und die Schaltung entsprechend eingestellt wird. So kann bei einem motorangetriebenen Zweirad das vom Motor aufgebrachte Drehmoment bei der Einstellung des optimalen Übersetzungsverhältnisses berücksichtigt werden. Dabei kann selbstverständlich auch die Fahreranforderung, z.B. über das Tretmoment berücksichtigt werden. Insgesamt lässt sich somit eine automatische Schaltung realisieren, indem die Schaltung, d.h. das Verschieben des wenigstens einen Aktuators, in Abhängigkeit von den Fahrbedingungen und dem erzeugten Motorantriebsmoment betrieben wird. So kann automatisch in einen höheren Gang geschalten werden, d.h. in eine Stellung, in der das Übertragungselement einen größeren radialen Abstand vom Mittelpunkt der Drehachse aufweist, wenn durch entsprechende Sensoren am Fahrzeug bzw. (Elektro-) Fahrrad erkannt wird, dass eine veränderte Geschwindigkeit, eine höhere Beschleunigung oder eine sonstige geänderte Antriebsleistung gewünscht wird. Denkbar ist hierbei, dass bei einer veränderten Trittfrequenz, einer veränderten durch den Fahrer aufgebrachten Kraft auf die Tretkurbel, oder der Erkennung einer Berg- oder Talfahrt die Schaltung in einen höheren oder einen niedrigeren Gang schaltet.

Es kann auch vorgesehen sein, dass durch die vorgeschlagene Schaltung der Elektroantrieb des Fahrzeugs bzw. Fahrrads in einem Bereich gehalten wird, in dem eine optimale Energieausnutzung zur Übertragung des Antriebsmoments durchgeführt werden kann.

Vorstehend wurde im Wesentlichen die Möglichkeit der Erhöhung des Abstands des Übertragungselements zum Mittelpunkt der Drehachse des ersten Drehelements beschrieben, um einen höheren Gang bzw. eine größere Übersetzung zu erreichen. Selbstverständlich kann die Schaltung sowie das Verfahren auch dazu eingesetzt werden, einen niedrigeren Gang bzw. eine kleinere Übersetzung einzustellen. Entsprechend wird die Schaltung entgegen gesetzt betrieben, z.B. indem die Zähne eingefahren werden.

Das beschriebene Verfahren kann eigenständig oder im Zusammenspiel mit der elektronischen Steuerung des Antriebs eines motorgetrieben Zweirads in einem Steuergerät ablaufen.

Es sei darauf explizit darauf hingewiesen, dass die vorstehenden Ausführungen und Verfahren beliebig miteinander kombinierbar sind.

## Patentansprüche

1. Schaltung für ein Fahrzeug, insbesondere ein Zweirad,
mit
• wenigstens einem ersten zur Übertragung von Drehbewegungen geeigneten Drehelement (10, 30, 300), welches um eine Mittelachse (20, 330) drehbar gelagert ist, und
• einem Übertragungselement (320), welches umfänglich in einem ersten Abstand (140, 340) zur Mittelachse an dem Drehelement anliegt, und
• wenigstens einem Aktuator (110, 130), der durch eine Verschiebung wenigstens eines Teils des ersten Drehelements in radialer Richtung den Abstand des Übertragungselements von der Mittelachse verändert,
wobei das erste Drehelement (10, 30, 300) in seinem äußeren Umfang erste Zähne (100) zum Eingriff in das Übertragungselement (320) aufweist, und vorgesehen ist, dass wenigstens einem Teil der ersten Zähne (100) erste Aktuatoren (110) zugeordnet sind
**dadurch gekennzeichnet, dass**
das erste Drehelement (10, 30, 300) in seinem äußeren Umfang zwischen den außen liegenden ersten Zähnen (100) dazwischen liegende verborgene, versenkte bzw. inaktive zweite Zähne (120) aufweist, wobei vorgesehen ist, dass diesen zweiten Zähnen (120) zweite Aktuatoren (130) zugeordnet sind.

2. Schaltung nach Anspruch 1, **dadurch gekennzeichnet, dass** jeder n-te Zwischenraum zwischen den ersten Zähnen (100) mit einem zusätzlichen zweiten Zahn (120) ausgestattet ist, wobei insbesondere vorgesehen ist, dass zwischen je zwei Zähnen oder einem Paar der ersten Zähne ein zweiter Zahn vorgesehen ist.

3. Schaltung nach Anspruch 1, **dadurch gekennzeichnet, dass** der obere Teil der versenkten zweiten Zähne (120) als Auflagefläche für das Übertragungselement dient.

4. Schaltung nach einem der vorherigen Ansprüche, **dadurch gekennzeichnet, dass** die Zähne der zeitlich gestuft nach außen bewegt oder eingefahren werden können.

5. Schaltung nach einem der vorhergehenden Ansprüche, **dadurch gekennzeichnet, dass** die Ansteuerung des wenigstens einen Aktuators (110, 130) elektrisch erfolgt, wobei insbesondere vorgesehen ist, dass die Ansteuerung gepulst bzw. punktuell erfolgt.

6. Schaltung nach einem der vorhergehenden Ansprüche, **dadurch gekennzeichnet, dass** das erste Drehelement (10, 30, 300) in radialer Richtung aus- und/oder einfahrbare Aktuatoren aufweist, wobei insbesondere als Aktuatoren Formgedächtnis-, Piezo, Magnet- oder Federelemente bzw. rheologisch, magnetisch und/oder elektromechanisch aktivierbare Elemente vorgesehen sind.

7. Schaltung nach einem der vorhergehenden Ansprüche, **dadurch gekennzeichnet, dass** die ersten und zweiten Aktuatoren (110, 120) unterschiedliche Ausdehnungen bzw. Hübe aufweisen, wobei insbesondere vorgesehen ist, dass die Ausdehnungen bzw. Hübe beider Aktuatorarten derart aufeinander abgestimmt sind, dass bei einer Ansteuerung bzw. einer Ausdehnung die mit ihnen verbundenen ersten und zweiten Zähne weitestgehend auf einer gleichen Kreisentfernung in einem zweiten Abstand (150) vom Mittelpunkt der Mittelachse (20) liegen.

8. Schaltung nach einem der vorherigen Ansprüche, **dadurch gekennzeichnet, dass** die Zähne mittels schraubenförmiger Verbindungselemente mit der Mittelachse verbunden sind, wobei vorgesehen ist, dass die den Zähnen zugeordneten Aktuatoren die Zähne schraubenförmig nach außen herausdrehen bzw. nach innen hereindrehen können.

9. Schaltung nach einem der vorherigen Ansprüche, **dadurch gekennzeichnet, dass** nach der Verschiebung mittels der Aktuatoren eine Rastposition erreicht wird, wobei insbesondere vorgesehen ist, dass diese Rastposition ohne Ansteuerung der Aktuatoren beibehalten wird.

10. Schaltung nach Anspruch 9, **dadurch gekennzeichnet, dass** die Rastposition durch eine erneute Ansteuerung eines Aktuators oder eines sonstigen Halteelements gelöst wird.

11. Schaltung nach einem der vorherigen Ansprüche, **dadurch gekennzeichnet, dass** als erstes Drehelement (10, 30, 300) ein Kettenblatt oder ein Ritzel eines Zweirads vorgesehen ist.

12. Fahrzeug mit einer Schaltung nach einem der vorhergehenden Ansprüche, **dadurch gekennzeichnet, dass** das Drehelement (10, 30, 300) an einem Motor oder an einem Rad befestigt ist und das Übertragungselement (320) zur Übertragung der Antriebsleistung auf ein Abtriebsrad vorgesehen ist.

13. Verfahren zur Durchführung eines Schaltvorgangs an einer Schaltung eines Fahrzeugs, insbesondere einer Schaltung nach einem der Ansprüche 1 bis 11 an einem Zweirad, wobei die Schaltung
• wenigstens ein erstes zur Übertragung von Drehbewegungen geeignetes Drehelement (10, 30, 300), welches um eine Mittelachse (20, 330) drehbar gelagert ist, und
• ein Übertragungselement (320), welches umfänglich in einem ersten Abstand (140, 340) zur Mittelachse an dem Drehelement anliegt, und
• wenigstens einen Aktuator (110, 130), der durch eine Verschiebung wenigstens eines Teils des ersten Drehelements in radialer Richtung den Abstand des Übertragungselements von der Mittelachse verändert, aufweist,
wobei das erste Drehelement (10, 30, 300) in seinem äußeren Umfang erste Zähne (100) zum Eingriff in das Übertragungselement (320) aufweist, und vorgesehen ist, dass wenigstens einem Teil der ersten Zähne (100) erste Aktuatoren (110) zugeordnet sind, und
das erste Drehelement (10, 30, 300) in seinem äußeren Umfang zwischen den außen liegenden ersten Zähnen (100) dazwischen liegende verborgene, versenkte bzw. inaktive zweite Zähne (120) aufweist, wobei vorgesehen ist, dass diesen zweiten Zähnen (120) zweite Aktuatoren (130) zugeordnet sind,
wobei in einem ersten Schritt eine Schaltungsanforderung erfasst wird, und in einem zweiten Schritt in Abhängigkeit der Schaltungsanforderung des Fahrers wenigstens die ersten und zweiten Aktuatoren (110, 130) derart angesteuert werden, dass eine Verschiebung wenigstens eines Teils der ersten und zweiten Zähne (110, 120) des ersten Drehelements in radialer Richtung durchgeführt wird, wobei die Verschiebung den Abstand des Übertragungselements von der Mittelachse verändert.

14. Verfahren zur Durchführung eines Schaltvorgangs nach Anspruch 15, **dadurch gekennzeichnet, dass** die Verschiebung durch den Aktuator, insbesondere eine radiale Verschiebung, in einem Zeitraum erfolgt, in dem das Übertragungselement nicht am ersten Drehelement anliegt.

15. Verfahren nach Anspruch 13 oder 14, **dadurch gekennzeichnet, dass** der Schaltvorgang bzw. die Aktivierung der Aktuatoren nur in einem Leerlauf durchgeführt wird bzw. dass während des Schaltvorgangs ein Leerlauf erzeugt wird.

## Claims

1. Gear shift for a vehicle, in particular a two-wheeled vehicle, having
• at least a first rotary element (10, 30, 300) which is suitable for transmitting rotational movements and is mounted so as to be rotatable about a central axis (20, 330), and
• a transmission element (320) which bears circumferentially on the rotary element at a first distance (140, 340) from the central axis, and
• at least one actuator (110, 130) which changes the distance of the transmission element from the central axis by shifting at least part of the first rotary element in the radial direction,
wherein the first rotary element (10, 30, 300) has in its outer circumference first teeth (100) for engagement in the transmission element (320), and there is provision that at least some of the first teeth (100) are assigned first actuators (110),
**characterized in that**
the first rotary element (10, 30, 300) has in its outer circumference countersunk or inactive second teeth (120) which lie concealed between the outer first teeth (100), wherein there is provision that these second teeth (120) are assigned second actuators (130).

2. Gear shift according to Claim 1, **characterized in that** every n-th intermediate space between the first teeth (100) is equipped with an additional second tooth (120), wherein in particular there is provision that a second tooth is provided between every two teeth or one pair of the first teeth.

3. Gear shift according to Claim 1, **characterized in that** the upper part of the countersunk second teeth (120) serves as a bearing surface for the transmission element.

4. Gear shift according to one of the preceding claims, **characterized in that** the teeth of the can be moved outwards or retracted in a chronologically staggered fashion.

5. Gear shift according to one of the preceding claims, **characterized in that** the at least one actuator (110, 130) is actuated electrically, wherein, in particular, there is provision that the actuation takes place in a pulsed or punctiform fashion.

6. Gear shift according to one of the preceding claims, **characterized in that** the first rotary element (10, 30, 300) has actuators which can be extended and/or retracted in a radial direction, wherein, in particular, shape-memory elements, piezo elements, magnetic elements or spring elements or elements which can be activated rheologically, magnetically and/or electromechanically are provided as actuators.

7. Gear shift according to one of the preceding claims, **characterized in that** the first and second actuators (110, 120) have different degrees of expansion or travel, wherein, in particular, there is provision that the degrees of expansion or travel of the two types of actuator are matched to one another in such a way that in the case of an actuation or an expansion the first and second teeth which are connected thereto lie largely at the same circular distance, at a second distance (150) from the central point of the central axis (20).

8. Gear shift according to one of the preceding claims, **characterized in that** the teeth are connected to the central axis by means of helical connecting elements, wherein there is provision that the actuators which are assigned to the teeth can rotate the teeth outwards, or rotate them inwards in the form of a screw.

9. Gear shift according to one of the preceding claims, **characterized in that** after the shifting by means of the actuators, a latching position is achieved, wherein, in particular, there is provision that this latching position is maintained without actuating the actuators.

10. Gear shift according to Claim 9, **characterized in that** the latching position is released by renewed actuation of an actuator or of some other securing element.

11. Gear shift according to one of the preceding claims, **characterized in that** a chain ring or a pinion of a two-wheeled vehicle is provided as first rotary element (10, 30, 300).

12. Vehicle having a gear shift according to one of the preceding claims, **characterized in that** the rotary element (10, 30, 300) is attached to a motor or to a wheel, and the transmission element (320) is provided for transmitting the driving power to an output gear.

13. Method for carrying out a gear shift process on a gear shift of a vehicle, in particular of a gear shift according to one of Claims 1 to 11 on a two-wheeled vehicle, wherein the gear shift
• has at least a first rotary element (10, 30, 300) which is suitable for transmitting rotational movements and is mounted so as to be rotatable about a central axis (20, 330), and
• a transmission element (320) which bears circumferentially on the rotary element at a first distance (140, 340) from the central axis, and
• at least one actuator (110, 130) which changes the distance of the transmission element from the central axis by shifting at least part of the first rotary element in the radial direction,
wherein the first rotary element (10, 30, 300) has in its outer circumference first teeth (100) for engagement in the transmission element (320), and there is provision that at least some of the first teeth (100) are assigned first actuators (110), and the first rotary element (10, 30, 300) has in its outer circumference countersunk or inactive second teeth (120) which lie concealed between the outer first teeth (100), wherein there is provision that these second teeth (120) are assigned second actuators (130),
wherein in a first step a gear shift request is detected, and in a second step at least the first and second actuators (110, 130) are actuated as a function of the gear shift request by the driver in such a way that shifting of at least some of the first and second teeth (110, 120) of the first rotary element is carried out in the radial direction, wherein the shifting changes the distance of the transmission element from the central axis.

14. Method for carrying out a gear shift process according to Claim 15, **characterized in that** the shifting is carried out by the actuator, in particular radial shifting, in a time period in which the transmission element does not bear on the first rotary element.

15. Method according to Claim 13 or 14, **characterized in that** the gear shift process or the activation of the actuators is carried out only in an idling mode or in that an idling mode is generated during the gear shift process.

## Revendications

1. Dispositif de changement de rapport destiné à un véhicule, notamment à un deux roues, comportant
- au moins un premier élément tournant (10, 30, 300) destiné à transmettre des mouvements de rotation, qui est monté tournant autour d'un axe central (20, 330), et
- un élément de transmission (320) qui prend appui de manière circonférentielle sur l'élément tournant à une première distance (140, 340) de l'axe central, et
- au moins un actionneur (110, 130) qui modifie, par décalage d'au moins une partie du premier élément tournant en direction radiale, la distance de l'élément de transmission à l'axe central,
dans lequel le premier élément tournant (10, 30, 300) comporte sur sa circonférence extérieure des premières dents (100) destinées à s'engager dans l'élément de transmission (320), et il est fait en sorte que des premiers actionneurs (110) soient associés à une partie des premières dents (100),
**caractérisé en ce que**
le premier élément tournant (10, 30, 300) comporte sur sa circonférence extérieure, entre les premières dents (100) situées à l'extérieur, des secondes dents (120) situées entre celles-ci, déformées, abaissées, ou inactives, dans lequel il est fait en sorte que des seconds actionneurs (130) soient associés auxdites secondes dents (120).

2. Dispositif de changement de rapport selon la revendication 1, **caractérisé en ce que** chaque n-ème espace intermédiaire entre les premières dents (100) soit muni d'une seconde dent (120) supplémentaire, dans lequel il est notamment fait en sorte qu'une seconde dent soit prévue entre deux dents respectives ou une paire des premières dents.

3. Dispositif de changement de rapport selon la revendication 1, **caractérisé en ce que** la partie supérieure des secondes dents (120) abaissées est utilisée en tant que surface d'appui pour l'élément de transmission.

4. Dispositif de changement de rapport selon l'une quelconque des revendications précédentes, **caractérisé en ce que** les dents de la peuvent être déplacées ou décalées vers l'extérieur de manière échelonnée dans le temps.

5. Dispositif de changement de rapport selon l'une quelconque des revendications précédentes, **caractérisé en ce que** la commande de l'au moins un actionneur (110, 130) s'effectue électriquement, dans lequel il est notamment fait en sorte que la commande soit effectuée de manière impulsionnelle ou ponctuelle.

6. Dispositif de changement de rapport selon l'une quelconque des revendications précédentes, **caractérisé en ce que** le premier élément tournant (10, 30, 300) comporte des actionneurs pouvant être dégagés et/ou engagés en direction radiale, dans lequel il est notamment prévu en tant qu'actionneurs des éléments à mémoire de forme, piézoélectriques, magnétiques ou à ressort, ou des éléments activables de manière rhéologique, magnétique et/ou électromagnétique.

7. Dispositif de changement de rapport selon l'une quelconque des revendications précédentes, **caractérisé en ce que** les premier et second actionneurs (110, 120) comportent différentes extensions ou courses, dans lequel il est notamment fait en sorte que les extensions ou les courses des deux types d'actionneurs soient adaptées les unes aux autres de manière à ce que, lors d'une commande ou d'une extension, les première et seconde dents qui leur sont reliées se situent autant que possible sur à un même éloignement circulaire à une seconde distance (150) du centre de l'axe central (20).

8. Dispositif de changement de rapport selon l'une quelconque des revendications précédentes, **caractérisé en ce que** les dents sont reliées à l'axe central au moyen d'éléments de liaison en forme de vis, dans lequel il est fait en sorte que les actionneurs associés aux dents puissent être sortis en tournant ou être rentrés en tournant.

9. Dispositif de changement de rapport selon l'une quelconque des revendications précédentes, **caractérisé en ce qu'**après le décalage effectué au moyen des actionneurs, une position de verrouillage est atteinte, dans lequel il est fait en sorte que ladite position de verrouillage soit maintenue sans commande par les actionneurs.

10. Dispositif de changement de rapport selon la revendication 9, **caractérisé en ce que** la position de verrouillage est libérée par une nouvelle commande d'un actionneur ou d'un autre élément de support.

11. Dispositif de changement de rapport selon l'une quelconque des revendications précédentes, **caractérisé en ce qu'**il est prévu en tant que premier élément tournant (10, 30, 300) un plateau ou un pignon d'un deux roues.

12. Véhicule comportant un dispositif de changement de rapport selon l'une quelconque des revendications précédentes, **caractérisé en ce que** l'élément tournant (10, 30, 300) est fixé à un moteur ou à une roue et **en ce que** l'élément de transmission (320) est conçu pour transmettre la puissance motrice à une roue motrice.

13. Procédé de mise en oeuvre d'un processus de changement de rapport sur un dispositif de changement de rapport d'un véhicule, notamment un dispositif de changement de rapport selon l'une quelconque des revendications 1 à 11, sur un deux roues, dans lequel le dispositif de changement de rapport comporte
- au moins un premier élément tournant (10, 30, 300), apte à transmettre des mouvements de rotation, qui est monté tournant autour d'un axe central (20, 330), et
- un élément de transmission (320) qui prend appui de manière circonférentielle sur l'élément tournant à une première distance (140, 340) de l'axe central, et
- au moins un actionneur (110, 130) qui modifie la distance entre l'élément de transmission et l'axe central par un décalage d'au moins une partie du premier élément tournant en direction radiale,
dans lequel le premier élément tournant (10, 30, 300) comporte, sur sa circonférence extérieure, des premières dents (100) destinées à s'engager dans l'élément de transmission (320), et il est fait en sorte que des premiers actionneurs (110) soient associés à au moins une partie des premières dents (100), et
le premier élément tournant (10, 30, 300) comporte, sur sa circonférence extérieure, entre les premières dents (100) situées vers l'extérieur, des secondes dents (120) situées entre celles-ci, déformées, abaissées ou inactives, dans lequel il est fait en sorte que des seconds actionneurs (130) soient associés auxdites secondes dents (120), dans lequel, lors d'une première étape, une demande de changement de rapport est détectée et, lors d'une seconde étape, au moins les premiers et seconds actionneurs (110, 130) sont commandés en fonction de la demande de changement de rapport venant du conducteur, de manière à ce qu'un décalage d'au moins une partie des premières et secondes dents (110, 120) du premier élément tournant soit effectué en direction radiale, dans lequel le décalage modifie la distance entre l'élément de transmission et l'axe central.

14. Procédé de mise en oeuvre d'un processus de changement de rapport selon la revendication 15, **caractérisé en ce que** le décalage est effectué par l'actionneur, notamment un décalage radial, au cours d'un intervalle de temps lors duquel l'élément de transmission ne prend pas appui sur le premier élément tournant.

15. Procédé selon la revendication 13 ou 14, **caractérisé en ce que** le processus de changement de rapport ou l'activation des actionneurs n'est effectué qu'en roue libre ou **en ce qu'**un fonctionnement en roue libre est produit pendant le processus de changement de rapport.
